# EUROPÄISCHE PATENTSCHRIFT

(11) **EP 2 507 886 B1**
(45) Veröffentlichungstag und Bekanntmachung des Hinweises auf die Patenterteilung: **22.03.2017**
(21) Anmeldenummer: 10770524.6
(22) Anmeldetag: 04.10.2010
(51) Int. Cl.: H01F 38/14, H01F 38/18, H02J 5/00

(54) **VORRICHTUNG ZUR ÜBERTRAGUNG VON ELEKTRISCHER LEISTUNG VON EINER WAND ZU EINEM SCHARNIERGELENKIG AN DIESER WAND BEFESTIGEN FLÜGEL**
DEVICE FOR TRANSMITTING ELECTRIC POWER FROM A WALL TO A LEAF HINGEABLY FASTENED TO SAID WALL
DISPOSITIF DE TRANSMISSION DE PUISSANCE ÉLECTRIQUE D'UNE PAROI À UN VANTAIL FIXÉ À CETTE PAROI DE FAÇON ARTICULÉE PAR CHARNIÈRES

(30) Priorität: 02.12.2009 DE 102009044728
(43) Veröffentlichungstag der Anmeldung: 10.10.2012
(60) Teilanmeldung: 17154909.0
(73) Patentinhaber: Dr. Hahn GmbH & Co. KG, 41189 Mönchengladbach-Wickrath (DE)
(72) Erfinder: HERGLOTZ, Tibor, 52372 Kreuzau (DE); STEINFELD, Ingo, 40764 Langenfeld (DE); STAUDE, Wolfgang, 34513 Waldeck (DE)
(74) Vertreter: Kluin, Jörg-Eden
(86) Internationale Anmeldenummer: PCT/EP2010/064728
(87) Internationale Veröffentlichungsnummer: WO 2011/067010

(56) Entgegenhaltungen:
- EP-A2- 0 612 905
- WO-A1-2004/097866
- DE-A1- 3 915 812
- DE-U1- 20 305 769
- US-A1- 2002 056 233

## Beschreibung

Die Erfindung betrifft ein Verfahren und eine Vorrichtung zur Übertragung von elektrischer Leistung von einer Wand zu einem um eine Scharnierachse S scharniergelenkig an dieser Wand befestigten Flügel.

Bänder, die zur scharniergelenkigen Verbindung eines Flügels an einer Wand dienen, sind bereits seit langem, beispielsweise aus der DE 93 02 652 U1 bekannt. Sie haben sich in unterschiedlichen technischen Ausgestaltungen vielfach bewährt und finden auch bei Türen für Objekte wie Häuser, Geschäfte oder auch bei Fluchttüren Verwendung.

Derartige Türen weisen in zunehmendem Maße die Sicherheit oder den Komfort verbessernde Einrichtungen auf, die mittels elektrischer Energie betrieben werden. Zur Energieversorgung sind diese Einrichtungen über flexible Kabel mit einer externen Energiequelle verbunden.

Diese Kabelverbindungen beeinträchtigen das optische Erscheinungsbild deutlich und können zwischen dem Flügel und der Wand eingeklemmt werden, was zu Beschädigungen oder sogar zu Zerstörungen der Kabel führen kann.

Aus der DE 10 2004 017 341 A1 und der DE 203 05 769 U1 ist ein Band mit einem eingebauten Trafo für eine kontaktlose Energieübertragung bekannt. Dieses Band umfasst eine in einem Rahmenbandteil angeordnete Primärspule und eine in einem Flügelbandteil angeordnete Sekundärspule. Der magnetischen Ankopplung der Sekundärspule an die Primärspule, die in Richtung der Scharnierachse voneinander beabstandet sind, dient ein beide Spulen durchsetzender Bandbolzen.

Zwar ist grundsätzlich die kontaktlose Energieübertragung von einem feststehenden Rahmen in einen schwenkbar an dem Rahmen angeordneten Flügel zur Vermeidung der obengenannten Nachteile wünschenswert, Versuche haben jedoch gezeigt, dass mit dem aus der DE 10 2004 017 341 A1 und der DE 203 05 769 U1 bekannten Band nur sehr geringe elektrische Leistungen von der Primär- auf die Sekundärseite übertragen werden können, da die Verlustleistung bei der Übertragung sehr hoch ist.

Eine gattungsgemäße Vorrichtung ist aus der DE 39 15 812 A1 bekannt. Sie weist eine Primärspule auf, die um einen Bandbolzen, der einen Ferritkern bildet, gewickelt und relativ zu diesem fest ist. Ferner ist eine Sekundärspule vorgesehen, die konzentrisch zu der Primärspule angeordnet ist. Sie ist in einem Hohlraum eines Rahmenbandlappens relativ zu diesem fest angeordnet. Zwecks induktiver Übertragung von elektrischer Leistung kann die Primärspule mit einer Wechselspannung mit Netzfrequenz bis hin zu Höchstfrequenz beaufschlagt werden.

Der Erfindung liegt daher die Aufgabe zugrunde, eine Vorrichtung zur Übertragung von elektrischer Energie von einer Wand zu einem um eine Scharnierachse scharniergelenkig an dieser Wand befestigten Flügel zu schaffen, um eine kontaktlose Übertragung elektrischer Energie zumindest mit einer Leistung zu bewerkstelligen, wie sie zum Laden eines elektrischen Energiespeichers und/oder für einen elektrischen Verbraucher benötigt wird.

Diese Aufgabe wird durch die in Anspruch 1 wiedergegebene Vorrichtung gelöst.

Die erfindungsgemäße Vorrichtung zur Übertragung von elektrischer Leistung von einer feststehenden Wand in einen um eine Scharnierachse scharniergelenkig an der Wand angebrachten Flügel weist daher ein an der Wand befestigbares Wandteil, ein an dem Flügel befestigbares Flügelteil, eine an dem Wandteil vorgesehene Primärspule und eine an dem Flügelteil vorgesehene Sekundärspule auf, wobei die Primär- und Sekundärspule für Frequenzen von mindestens 20 kHz geeignet sind.

Um die induktive Ankopplung der Sekundärspule an die Primärspule zu verbessern, umfasst die Primärspule eine Primärspulenwicklung und einen Primärsspulenkörper mit ferromagnetischen oder ferrimagnetischen Eigenschaften, beispielsweise aus einem ferromagnetischen oder ferrimagnetischen Material, und die Sekundärspule eine Sekundärspulenwicklung und einen Sekundärspulenkörper mit ferromagnetischen oder ferrimagnetischen Eigenschaften, beispielsweise aus einem ferromagnetischen oder ferrimagnetischen Material.

Zur Verbesserung der Ankopplung und auch zur leichteren Wickelbarkeit der Spule finden ein Primärspulenkörper und/oder ein Sekundärspulenkörper Verwendung, der eine innere, zylindrische Mantelfläche aufweist, um welche die Primärspulenwicklung bzw. die Sekundärspulenwicklung gewickelt ist.

Bei der erfindungsgemäßen Vorrichtung umfassen die Primär- und Sekundärspulenkörper jeweils eine sich etwa konzentrisch zur inneren Mantelfläche in Richtung der Scharnierachse erstreckende Öffnung, durch die ein die Scharnierachse definierender Bandbolzen einschiebbar ist. Die Vorrichtung kann dann neben der Leistungsübertragung auch der Übertragung von mechanischen Kräften zwischen Flügel und Wand dienen und somit zugleich die herkömmliche Bandfunktion übernehmen.

Damit der Bolzen dann, um die induktive Ankopplung weiterhin zu verbessern, auch wie ein gemeinsamer Kern eines mit Hilfe der Primärspule und der Sekundärspule gebildeten Transformators wirkt, weist er auf der Länge, die von der Primär- und von der Sekundärspule überdeckt wird, eine Hülse mit ferromagnetischen oder ferrimagnetischen Eigenschaften, beispielsweise aus einem ferromagnetischen oder ferrimagnetischen Material auf. Ihre Länge ist vorzugsweise möglichst exakt an die Länge, die von der Primär- und von der Sekundärspule überdeckt wird, angepasst, um Verluste zu vermeiden.

Der Primärspulenkörper kann an der dem Flügelteil zugewandten Stirnseite die Spulenwicklung zumindest nahezu überdecken und an der gegenüberliegenden Stirnseite offen sein, der Sekundärspulenkörper kann auf der dem Wandteil zugewandten Stirnseite die Spulenwicklung zumindest nahezu überdecken und an der gegenüberliegenden Seite offen sein.

Darüber hinaus ist es abermals zur Verbesserung der induktiven Ankopplung der Sekundärspule an die Primärspule und auch um die Spulen widerstandsfähiger gegen äußere Einflüsse zu machen, von besonderem Vorteil, wenn der Primärspulenkörper und/oder der Sekundärspulenkörper eine äußere Mantelfläche umfassen, die konzentrisch zur inneren Mantelfläche angeordnet ist. Die Spulenwicklung befindet sich dann geschützt umgeben von der inneren und der äußeren Mantelfläche sowie der geschlossenen Stirnseite.

Aufgrund des Frequenzbereichs, den die Primärspannung vorzugsweise aufweist, bestehen die Primärspulenwicklung und die Sekundärspulenwicklung vorzugsweise aus Hochfrequenzlitze.

Die erfindungsgemäße Vorrichtung kann derart ausgestaltet sein, dass sie ausschließlich der Übertragung von elektrischer Energie von einer Wand zu einem um eine Scharnierachse scharniergelenkig an dieser Wand befestigten Flügel und nicht der Übertragung von mechanischen Kräften dient. Die eigentliche Befestigung des Flügels an der Wand erfolgt in einem solchen Falle ausschließlich mit Hilfe von zumindest zwei weiteren, herkömmlichen Bändern. Von der inneren Mantelfläche radial nach innen gesehen können der Primär- und der Sekundärspulenkörper dann massiv ausgebildet sein.

Die Hülse kann auf den Bolzen aufgeschoben sein. Es ist jedoch bevorzugt, die Hülse in einer konzentrisch zur Längsachse des Bolzens verlaufenden Ausnehmung vorzusehen. Sie ist dann - besonders bevorzugt - aus einem Kunststoffmaterial mit Ferritpartikeln gefertigt, da so die Einheit aus Bolzen mit Hülse besonders einfach herstellbar ist.

Um eine gute induktive Ankopplung zwischen der Primärspule und der Sekundärspule zu gewährleisten, ist zumindest eine der Primär- und Sekundärspulen federkraftbeaufschlagt gegen die jeweils andere Spule in Richtung der Scharnierachse verlagerbar in dem Wand- bzw. dem Flügelteil gelagert. Aufgrund dieser Maßnahme ist gewährleistet, dass die einander zugewandten Stirnseiten der beiden Spulen sich stets in direktem Kontakt befinden. Dies ist von besonderer Bedeutung, da sich überraschenderweise gezeigt hat, dass auch bei vorhandenen Bolzen mit Hülse bereits geringe Spaltmaße zu einer wesentlichen Verschlechterung der Leistungsübertragung von der Primär- auf die Sekundärspule führen.

Besonders bevorzugt ist es ferner, wenn die Spule eine Länge aufweist, die kleiner als der Außendurchmesser ihres Spulengehäuses ist. Insbesondere dann, wenn die erfindungsgemäße Vorrichtung auch zur Übertragung mechanischer Kräfte dienen soll, kann der Bolzen über eine größere Länge mechanisch gelagert werden, um so eine möglichst niedrige spezifische Materialbelastung zu erzielen.

Sind - wie ebenfalls bevorzugt - die Primärspule und die Sekundärspule baugleich ausgebildet, so lassen sich die Kosten für die Herstellung und die Lagerhaltung der Spulen reduzieren.

Versuche haben gezeigt, dass eine Leistungsübertragung von zumindest 500 Milliwatt bei einer Primärspannung von 5 V und einer Primärfrequenz von etwa 120 kHz erzielbar ist, wenn die Induktivitäten von Primärspule und Sekundärspule vorzugsweise etwa 30 µH betragen.

Um zu verhindern, dass bei einem inneren Kurzschluss einer Spule Teile der Vorrichtung mit der Primärspulenspannung beaufschlagt werden, ist es besonders bevorzugt, die Primärspule und/oder die Sekundärspule, insbesondere deren einander zugewandten Stirnseiten stoffschlüssig mit einem elektrisch isolierenden Material zu umgeben.

Die Erfindung soll nun anhand der beigefügten Zeichnungen weiter verdeutlicht werden. Es zeigen:
- Fig. 1: eine Explosionsdarstellung eines Ausführungsbeispiels einer erfindungsgemäßen Vorrichtung, der zugleich die Funktion eines herkömmlichen Bandes zukommt;
- Fig. 2: diese Vorrichtung in einer teilweise aufgerissenen Darstellung der Wand- und Flügelteile in einer perspektivischen Darstellung, mit schematisch angedeuteter Primär- und Sekundärelektronik;
- Fig. 3: das obere Wandteil und das Flügelteil, teilweise aufgerissen, in perspektivischer Einzeldarstellung;
- Fig. 4: eine Ansicht der offenen Stirnseite eines Spulenkörpers;
- Fig. 5: den Ausschnitt V in Fig. 2 im Schnitt durch die Scharnierachse;
- Fig. 6: eine Explosionsdarstellung einer weiteren Ausführungsform der erfindungsgemäßen Vorrichtung, die nur der Übertragung von elektrischer Leistung von einer Wand in einen Flügel dient.

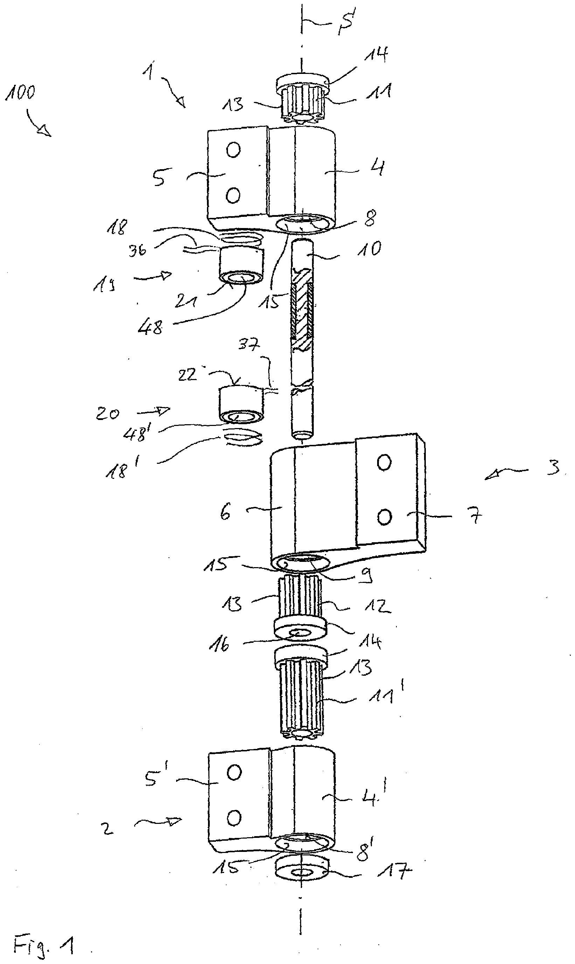

Die in den Figuren 1 bis 5 als Ganzes mit 100 bezeichnete Vorrichtung ist als sogenanntes dreiteiliges Band ausgebildet. Sie umfasst ein oberes Wandteil 1 und ein unteres Wandteil 2. Beide Teile 1, 2 sind in Richtung einer Scharnierachse S voneinander beabstandet.

Zwischen dem oberen und dem unteren Wandteil 1, 2 ist ein Flügelteil 3 angeordnet.

Die oberen und unteren Wandteile 1, 2 umfassen jeweils ein Wandscharnierteil 4, 4' und ein Wandbefestigungsteil 5, 5'. Dementsprechend umfasst das Flügelbandteil ein Flügelteil 6 und ein Flügelbefestigungsteil 7.

Die Scharnierachse S wird definiert durch einen die Wandscharnierteile 4, 4' und das Flügelscharnierteil 6 in Bolzenaufnahmen 8, 8' und 9 durchsetzenden Bolzen 10. Der Lagerung des Bolzens 10 in den Bolzenaufnahmen 8, 8', 9 dienen Lagerbuchsen 11, 11' und 12 aus einem Kunststoffmaterial, beispielsweise auf Basis von POM mit gleitlagermodifizierenden Zusätzen, welches sich für den Einsatz als Lagerbuchse bei Bändern bewährt hat. Die Lagerbuchsen 11, 11', 12 weisen sich parallel zur Scharnierachse S erstreckende, radiale Vorsprünge 13 auf. Der Durchmesser des die radialen Vorsprünge 13 miteinander verbindenden Kreises ist an den Innendurchmesser der Bolzenaufnahmen 8, 8', 9 derart angepasst, dass die Lagerbuchsen 11, 11', 12 spielfrei in die jeweilige Bolzenaufnahme eingreifen. An dem nach oben gerichteten Ende der Lagerbuchse des unteren Wandbandteils 2, an dem oberen Ende der Lagerbuchse 11 des oberen Wandbandteils 1 und an dem unteren Ende der Lagerbuchse 12 des Flügelteils 3 sind ringförmige Endbereiche 14 angeformt, die radial geringfügig über die radialen Vorsprünge 13 überstehen. Sie ruhen in einer entsprechend dimensionierten radialen Erweiterung 15 der jeweiligen Bolzenaufnahme 8, 8', 9 und schließen somit die Bolzenaufnahmen nach außen gegen ein Eindringen von Verunreinigungen ab. Darüber hinaus bilden die Endbereiche 14 der Lagerbuchsen 11' des untern Wandteils 2 und der Lagerbuchse 12 des Flügelteils 3 Auflager, über welche in Richtung der Scharnierachse wirkende Kräfte von dem Flügelteil 3 in das untere Wandteil 2 eingeleitet werden. Ferner weisen die Lagerbuchsen 11, 11', 12 innere Bohrungen 16 auf, deren Durchmesser derart an den Durchmesser des Bolzens 10 angepasst ist, so dass dieser drehbar, aber zumindest im wesentlichen spielfrei von den Lagerbuchsen 11, 11', 12 aufgenommen ist.

Den unteren Abschluss des unteren Wandteils 2 bildet eine Lagerscheibe 17, deren Abmessungen den Endbereichen 14 entspricht und die in eine radiale Erweiterung 15 des unteren Wandteils eingefügt ist.

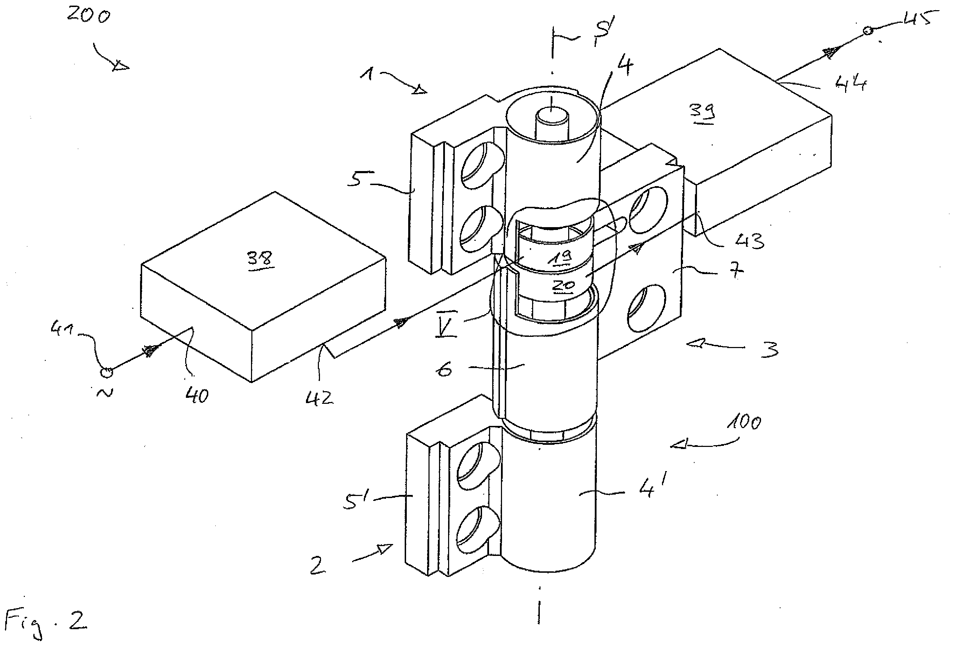

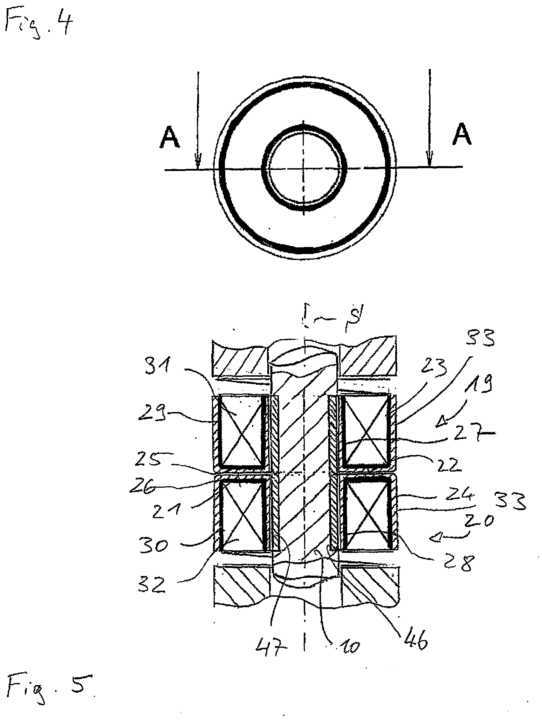

Die Länge der Lagerbuchse 11' entspricht nahezu der Länge der Bolzenaufnahme 8' des unteren Wandteils 2, wohingegen die Lagerbuchsen 11, 12 lediglich etwa halb so lang ausgebildet sind wie die Bolzenaufnahme 8 des oberen Wandteils 1 bzw. die Bolzenaufnahme 9 des Flügelteils 3. In den verbleibenden Freiraum der Bolzenaufnahmen 8, 9 sind eine Primärspule 19 und eine Sekundärspule 20 eingesetzt. Zwischen der Primärspule 19 und der Lagerbuchse 11 sowie zwischen der Sekundärspule 20 und der Lagerbuchse 12 befindet sich jeweils eine Druckfeder 18, 18'. Diese Druckfedern sorgen dafür, dass die beiden Primär- und Sekundärspulen 19, 20 mit ihren Stirnseiten 21, 22 aneinander liegen, wie es insbesondere in Fig. 2 und 5 erkennbar ist.

Die Primärspule 19 und die Sekundärspule 20 sind identisch ausgebildet, jedoch bezüglich der Scharnierachse S in umgekehrter Richtung montiert. Sie umfassen einen Primärspulenkörper 23 und einen Sekundärspulenkörper 24, der ferromagnetisches oder ferrimagnetisches Material umfasst. Die Spulenkörper 23, 24 weisen an ihren einander zugewandten Seiten jeweils eine geschlossene Stirnwandung 25, 26 auf, die jeweils von einer zentralen Durchgangsbohrung 48, 48' zum Durchtritt des Bandbolzens durchbrochen ist. Von den Stirnwandungen 25, 26 erstrecken sich konzentrisch zur Scharnierachse S in entgegengesetzter Richtung jeweils eine innere Mantelwandung 27, 28 sowie jeweils eine äußere Mantelwandung 29, 30. An der den Stirnwandungen 25, 26 gegenüberliegenden Seiten sind die Spulenkörper 23, 24 offen. Die Spulenkörper können aus Kunststoffmaterial gefertigt sein, in die Ferritpartikel eingelagert sind, beispielsweise Mangan-Zink-Ferrit enthaltend.

Im Inneren der Spulenkörper 24, 25 befinden sich die Primär- und Sekundärspulenwicklungen 31, 32, welche um die inneren Mantelwandungen 27, 28 gewickelt sind. Für die Spulenwicklungen findet Hochfrequenzlitze Verwendung.

Die Spulenkörper 23, 24 sind mit einem elektrisch nicht leitenden Kunststoffmaterial stoffschlüssig umspritzt.

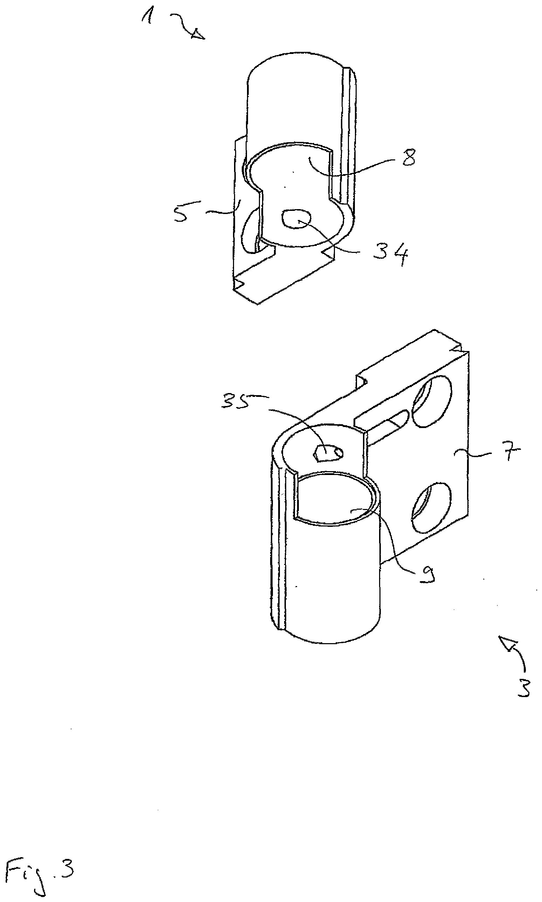

Wie insbesondere Fig. 1 und 3 entnehmbar ist, sind an dem oberen Wandteil 1 und an dem Flügelteil 3 Kanäle 34, 35 vorgesehen, welche sich von den Bandbolzenaufnahmen 8, 9 in das Rahmenbefestigungsteil 5 bzw. das Flügelbefestigungsteil 7 erstrecken. Sie dienen zum Durchführen von Anschlussleitungen 36, 37 der Primär- bzw. der Sekundärspule 19, 20.

In Fig. 2 ist eine erfindungsgemäße Vorrichtung 100 mit einer Primärelektronik 38 und einer Sekundärelektronik 39 zu einem System zur Übertragung von elektrischer Energie von einer Wand zu einem an dieser Wand befestigten Flügel dargestellt. Die Primärelektronik 38 dieses Systems 200 ist mit ihrem Eingang 40 mit einer Netzspannung 41 verbunden. Die Primärelektronik wandelt die Netzspannung in eine Spannung von maximal 48 V und einer Frequenz zwischen 20 und 140 kHz um, die am Ausgang 42 bereitgestellt wird. Letztere ist mit der Primärspule 19 verbunden. Es ist jedoch ebenfalls möglich, in der Primärelektronik 38 einen Wechselrichter vorzusehen, so dass die Primärelektronik auch an eine Gleichstromquelle angeschlossen werden kann.

Da die Primär- und Sekundärspulen 19, 20 identisch ausgebildet sind, liegt am Eingang 43 der Sekundärelektronik 39, der mit der Sekundärspule 20 verbunden ist, etwa dieselbe Spannung wie am Ausgang 42 an. In der Sekundärelektronik 39 wird diese Spannung in eine solche umgewandelt, die zum Betrieb eines am Ausgang 44 der Sekundärelektronik 39 angeschlossenen elektrischen Verbrauchers oder elektrischen Energiespeichers 45 geeignet ist.

Um die induktive Ankopplung zwischen Primärspule 19 und Sekundärspule 20 zu verbessern, weist der Bolzen 10 eine konzentrisch zur Scharnierachse S verlaufende Ausnehmung 46 auf. In dieser befindet sich eine Hülse 47 aus einem Kunststoffmaterial, in welches Ferritpartikel eingelagert sind. Die Länge der Hülse 47 ist so bemessen, dass sie zumindest nahezu exakt mit der Länge des aus Primär- und Sekundärspule 19, 20 bestehenden Spulenpakets übereinstimmt.

Das erfindungsgemäße System wurde mit folgendem Versuchsaufbau getestet: Als Primär- und Sekundärspule 19, 20 finden Spulen mit einer Spulenwicklung von 50 Windungen einer Hochfrequenz-Litze mit 0,05 mm Durchmesser Verwendung. Die Spuleninduktivität betrug etwa 30 µH. Die mit der Primärelektronik bereitgestellte Primärspannung betrug effektiv etwa 5 V mit einer Primärfrequenz von 120 kHz. Die Sekundärelektronik war derart konzipiert, dass sie eine Gleichspannung von etwa 5 V am Ausgang bereitstellte. Es konnte eine Leistung von bis zu 750 mW sekundärseitig bereitgestellt werden.

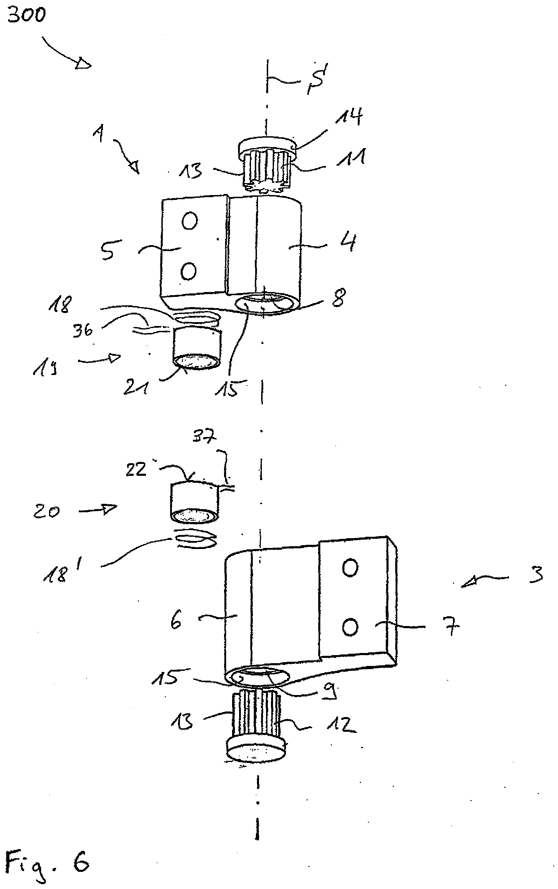

Ein weiteres Ausführungsbeispiel einer erfindungsgemäßen Vorrichtung 300 ist in Fig. 6 dargestellt. Für funktionsgleiche Bauteile sind dieselben Bezugsziffern verwendet worden wie bei der Vorrichtung 100. Zur Vermeidung von Wiederholungen sei auf deren vorstehende Beschreibung verwiesen.

Die Vorrichtung 300 dient ausschließlich der Übertragung elektrischer Leistung von einem Wandteil 1 in ein Flügelteil 3. Sie findet daher stets zusätzlich zu herkömmlichen Bändern bei einer Wand/Flügelanordnung Verwendung.

Bei dieser Vorrichtung 300 fehlt somit der Bolzen 10. Dementsprechend sind die Lagerbuchsen 11, 12 nicht mit einer Bohrung versehen. Sie sind derart an die Aufnahmen 8, 9 angepasst, dass sie in diese unter Erzeugung eines Kraftschlusses einpressbar sind, so dass sich auf den zugewandten Stirnseiten die Druckfedern 18, 18' abstützen können.

Die Primär- und Sekundärspulen 19, 20 weisen demnach Spulenkörper auf, die im Gegensatz zu den Spulenkörpern bei der Vorrichtung 100 keine zentrale Durchgangsbohrung zum Durchtritt des Bolzens aufweisen, sondern dort als massiver Körper aus ferromagnetischem Material ausgebildet sind.

Wird die erfindungsgemäße Vorrichtung an einer Wand/Türanordnung angebracht, die herkömmliche Bänder umfasst, so erfolgt dies so, dass die Scharnierteile 4, 6 mit ihren einander zugewandten Stirnseiten nicht aneinander stoßen, sondern ein Spalt verbleibt, der von den unter Federkraft stirnseitig aufeinander gedrückten Primär- und Sekundärspulen überbrückt wird. Da diese in Ermangelung eines sie durchsetzenden Bolzens auch quer zur Scharnierachse S verlagerbar sind, kann eine Justierung des Flügels in dem Wandausschnitt in allen drei Raumrichtungen erfolgen, ohne dass es zu einer besondern Anpassung der Vorrichtung hierzu bedarf.

### Bezugszeichenliste:

- 100, 300: Vorrichtung
- 200: System
- 1: oberes Wandteil
- 2: unteres Wandteil
- 3: Flügelteil
- 4, 4': Wandscharnierteil
- 5, 5': Wandbefestigungsteil
- 6: Flügelscharnierteil
- 7: Flügelbefestigungsteil
- 8, 8': Bolzenaufnahme
- 9: Bolzenaufnahme
- 10: Bolzen
- 11, 11': Lagerbuchse
- 12: Lagerbuchse
- 13: Vorsprünge
- 14: Endbereiche
- 15: Erweiterung
- 16: Bohrungen
- 17: Lagerscheibe
- 18, 18': Druckfeder
- 19: Primärspule
- 20: Sekundärspule
- 21: Stirnseite
- 22: Stirnseite
- 23: Primärspulenkörper
- 24: Sekundärspulenkörper
- 25: Stirnwandung
- 26: Stirnwandung
- 27: innere Mantelwandung
- 28: innere Mantelwandung
- 29: äußere Mantelwandung
- 30: äußere Mantelwandung
- 31: Primärspulenwicklung
- 32: Sekundärspulenwicklung
- 33: Kunststoffmaterial
- 34: Kanal
- 35: Kanal
- 36: Anschlussleitung
- 37: Anschlussleitung
- 38: Primärelektronik
- 39: Sekundärelektronik
- 40: Eingang
- 41: Netzspannung
- 42: Ausgang
- 43: Eingang
- 44: Ausgang
- 45: Verbraucher/Energiespeicher
- 46: Ausnehmung
- 47: Hülse
- 48, 48': Durchgangsbohrungen

## Patentansprüche

1. Vorrichtung (100) zur Übertragung von elektrischer Leistung von einer feststehenden Wand in einen um eine Scharnierachse scharniergelenkig an der Wand angebrachten Flügel,
mit einem an der Wand befestigbaren Wandteil (1),
mit einem an dem Flügel befestigbaren Flügelteil (3),
mit einer an dem Wandteil (1) vorgesehenen Primärspule (19), die eine Primärspulenwicklung (31) aufweist, und mit einer an dem Flügelteil (3) vorgesehenen Sekundärspule (20), die eine Sekundärspulenwicklung (32) aufweist,
wobei die Primärspule (19) und die Sekundärspule (20) für Frequenzen von mindestens 20 kHz geeignet sind,
**dadurch gekennzeichnet,**
**dass** die Primärspule einen Primärspulenkörper (23) mit ferromagnetischen Eigenschaften und die Sekundärspule (20) einen Sekundärspulenkörper (24) mit ferromagnetischen Eigenschaften aufweist,
**dass** die Primärspule (19) und die Sekundärspule (20) mit einander zugewandten Stirnseiten (21, 22) zumindest nahezu aneinandergrenzen,
**dass** sich die Primär- und Sekundärspulenwicklungen (31, 32) im Inneren der Spulenkörper (24, 25) befinden und der Primärspulenkörper (23) und/oder der Sekundärspulenkörper (24) eine innere, zylindrische Mantelwandung (27, 28) aufweist, um welche die Primärspulenwicklung (31) bzw. die Sekundärspulenwicklung (32) gewickelt ist,
und **dass** der Primär- und Sekundärspulenkörper (23, 24) jeweils eine sich etwa konzentrisch zur inneren Mantelwandung (27, 28) in Richtung der Scharnierachse erstreckende Öffnung umfasst, durch die ein die Scharnierachse definierender Bolzen einschiebbar ist, der auf der Länge, die von der Primär- und von der Sekundärspule überdeckt wird, eine Hülse mit ferromagnetischen Eigenschaften umfasst.

2. Vorrichtung nach Anspruch 1, **dadurch gekennzeichnet, dass** der Primärspulenkörper (23) an der dem Flügelteil zugewandten Stirnseite (21) die Spulenwicklung (31) zumindest nahezu überdeckt und welcher an der gegenüberliegenden Stirnseite offen ist, und den Sekundärspulenkörper (24) auf der dem Wandteil zugewandten Stirnseite (22) die Spulenwicklung (32) zumindest nahezu überdeckt und an der gegenüberliegenden Stirnseite offen ist.

3. Vorrichtung nach Anspruch 1 oder 2, **dadurch gekennzeichnet, dass** der Primärspulenkörper (23) und/oder der Sekundärspulenkörper (24) eine äußere Mantelwandung (29) umfasst, die konzentrisch zur inneren Mantelwandung (27, 28) angeordnet ist.

4. Vorrichtung nach einem der Ansprüche 1 bis 3, **dadurch gekennzeichnet, dass** die Primärspulenwicklung (31) und die Sekundärspulenwicklung (32) aus Hochfrequenzlitze bestehen.

5. Vorrichtung nach einem der Ansprüche 1 bis 4, **dadurch gekennzeichnet, dass** die Hülse (47) in einer konzentrisch zur Längsachse des Bolzens (10) verlaufenden Ausnehmung (46) vorgesehen ist.

6. Vorrichtung nach einem der Ansprüche 1 bis 5, **dadurch gekennzeichnet, dass** die Hülse (47) aus einem Kunststoffmaterial mit Ferritpartikeln gefertigt ist.

7. Vorrichtung nach einem der Ansprüche 1 bis 6, **dadurch gekennzeichnet, dass** zumindest eine der Primär- und Sekundärspulen (19, 20) federkraftbeaufschlagt gegen die jeweils andere Spule in Richtung der Scharnierachse verlagerbar in dem Wand- bzw. dem Flügelteil gelagert ist.

8. Vorrichtung nach einem der Ansprüche 1 bis 7, **dadurch gekennzeichnet, dass** die Länge der Spule in Richtung der Scharnierachse kleiner als der Außendurchmesser des Spulengehäuses ist.

9. Vorrichtung nach einem der Ansprüche 1 bis 8, **dadurch gekennzeichnet, dass** die Primärspule (19) und die Sekundärspule (20) gleich ausgebildet sind.

10. Vorrichtung nach einem der Ansprüche 1 bis 9, **dadurch gekennzeichnet, dass** die Induktivität der Primärspule (19) und/oder der Sekundärspule (20) zwischen 1 µH und 100 µH beträgt.

11. Vorrichtung nach Anspruch 10, **dadurch gekennzeichnet, dass** die Induktivität der Primär- und/oder der Sekundärspule (19, 20) etwa 30 µH beträgt.

12. Vorrichtung nach einem der Ansprüche 1 bis 11, **dadurch gekennzeichnet, dass** die Primärspule (19) und die Sekundärspule (20) für eine effektive Spannung von max. 48 V geeignet sind.

13. Vorrichtung nach einem der Ansprüche 1 bis 12, **dadurch gekennzeichnet, dass** die Primärspule (19) und/oder die Sekundärspule (20), insbesondere deren einander zugewandte Stirnseiten stoffschlüssig von einem elektrisch isolierenden Material umgeben sind.

## Claims

1. A device (100) for transmitting electric power from a fixed wall to a door which is mounted to the wall with articulation about a hinge axis,
having a wall part (1) which can be attached to the wall;
having a door part (3) which can be attached to the door;
having a primary coil (19) included on the wall part, comprising a primary wire-wound coil (31), and having a secondary coil (20) included on the door part, comprising a secondary wire-wound coil (32),
wherein the primary coil (19) and the secondary coil (20) are suitable for frequencies of at least 20 kHz,
**characterized in that**
the primary coil has a primary coil body (23) with ferromagnetic properties, and the secondary coil (20) has a secondary coil body (24) with ferromagnetic properties,
**in that** the end faces (21, 22) of the primary coil (19) and the secondary coil (20), facing each other, adjoin each other at least nearly,
**in that** the primary and secondary wire-wound coils (31, 32) are positioned in the interior of the coil bodies (24, 25), and the primary coil body (23) and/or the secondary coil body (24) has an inner cylindrical wall shell (27, 28), the primary wire-wound coil (31) and/or the secondary wire-wound coil (32) being wound around the same,
and **in that** the primary and secondary coil bodies (23, 24) each comprise an opening which extends in the direction of the hinge axis, approximately concentrically to the inner wall shell (27, 28), wherein a pin which defines the hinge axis can be pushed through the same, said pin having a sleeve, with ferromagnetic properties, over the length which is covered by the primary and by the secondary coils.

2. The device according to claim 1, **characterized in that** the primary coil body (23) at least essentially covers the wire-wound coil (31) on the end face (21) which faces the door part, and is open on the opposite end face, and the secondary coil body (24) at least essentially covers the wire-wound coil (32) on the end face (22) which faces the wall part, and is open on the opposite end face.

3. The device according to claim 1 or 2, **characterized in that** the primary coil body (23) and/or the secondary coil body (24) comprises an outer wall shell (29) which is arranged concentrically to the inner wall shell (27, 28).

4. The device according to one of claims 1 to 3, **characterized in that** the primary wire-wound coil (31) and the secondary wire-wound coil (32) are made of high-frequency stranded wire.

5. The device according to one of claims 1 to 4, **characterized in that** the sleeve (47) is disposed in a recess (46) which runs concentric to the longitudinal axis of the pin (10).

6. The device according to one of claims 1 to 5, **characterized in that** the sleeve (47) is made of a plastic material with ferrite particles.

7. The device according to one of claims 1 to 6, **characterized in that** at least one of the primary and secondary coils (19, 20) is mounted in the wall part and/or door part under spring load against the other coil so as to be able to move in the direction of the hinge axis.

8. The device according to one of claims 1 to 7, **characterized in that** the length of the coil in the direction of the hinge axis is less than the outer diameter of the coil housing.

9. The device according to one of claims 1 to 8, **characterized in that** the primary coil (19) and the secondary coil (20) have identical designs.

10. The device according to one of claims 1 to 9, **characterized in that** the inductivity of the primary coil (19) and/or the secondary coil (20) is between 1 µH and 100 µH.

11. The device according to claim 10, **characterized in that** the inductivity of the primary and/or the secondary coil (19, 20) is about 30 µH.

12. The device according to one of claims 1 to 11, **characterized in that** the primary coil (19) and the secondary coil (20) are suitable for an effective maximum voltage of 48V.

13. The device according to one of claims 1 to 12, **characterized in that** the primary coil (19) and/or the secondary coil (20) are sheathed by a form-fitting electrically insulating material, particularly on the end faces thereof which face each other.

## Revendications

1. Dispositif (100) de transmission de puissance électrique d'une paroi fixe à un vantail monté sur la paroi de façon articulée par charnières autour d'un axe de charnière,
avec une partie de paroi (1) pouvant être fixée à la paroi,
avec une partie de vantail (3) pouvant être fixée au vantail,
avec une bobine primaire (19) prévue au niveau de la partie de paroi (1), qui présente un enroulement de bobine primaire (31), et avec une bobine secondaire (20) prévue au niveau de la partie de vantail (3), qui présente un enroulement de bobine secondaire (32),
dans lequel la bobine primaire (19) et la bobine secondaire (20) sont adaptées pour des fréquences d'au moins 20 kHz,
**caractérisé en ce**
**que** la bobine primaire présente un corps de bobine primaire (23) avec des propriétés ferromagnétiques et la bobine secondaire (20) présente un corps de bobine secondaire (24) avec des propriétés ferromagnétiques,
**que** la bobine primaire (19) et la bobine secondaire (20) sont au moins pratiquement contigües avec des faces frontales (21, 22) tournées l'une vers l'autre,
**que** les enroulements de bobine primaire et secondaire (31, 32) se trouvent à l'intérieur des corps de bobine (24, 25) et le corps de bobine primaire (23) et/ou le corps de bobine secondaire (24) présente une paroi enveloppante cylindrique intérieure (27, 28) autour de laquelle l'enroulement de bobine primaire (31) ou l'enroulement de bobine secondaire (32) est enroulé,
et **que** le corps de bobine primaire et secondaire (23, 24) comprend respectivement une ouverture s'étendant en direction de l'axe de charnière de manière à peu près concentrique par rapport à la paroi enveloppante intérieure (27, 28), par laquelle un boulon définissant l'axe de charnière peut être inséré, qui comprend une douille avec des propriétés ferromagnétiques sur la longueur, qui est recouverte par la bobine primaire et par la bobine secondaire.

2. Dispositif selon la revendication 1, **caractérisé en ce que** le corps de bobine primaire (23) recouvre au moins pratiquement l'enroulement de bobine (31) au niveau de la face frontale (21) tournée vers la partie de vantail et lequel est ouvert au niveau de la face frontale opposée, et l'enroulement de bobine (32) recouvre au moins pratiquement le corps de bobine secondaire (24) sur la face frontale (22) tournée vers la partie de paroi et est ouverte au niveau de la face frontale opposée.

3. Dispositif selon la revendication 1 ou 2, **caractérisé en ce que** le corps de bobine primaire (23) et/ou le corps de bobine secondaire (24) comprend une paroi enveloppante extérieure (29), qui est agencée concentriquement par rapport à la paroi enveloppante intérieure (27, 28).

4. Dispositif selon l'une quelconque des revendications 1 à 3, **caractérisé en ce que** l'enroulement de bobine primaire (31) et l'enroulement de bobine secondaire (32) sont constitués de torons haute fréquence.

5. Dispositif selon l'une quelconque des revendications 1 à 4, **caractérisé en ce que** la douille (47) est prévue dans un évidement (46) s'étendant concentriquement par rapport à l'axe longitudinal du boulon (10).

6. Dispositif selon l'une quelconque des revendications 1 à 5, **caractérisé en ce que** la douille (47) est fabriquée en un matériau plastique avec des particules de ferrite.

7. Dispositif selon l'une quelconque des revendications 1 à 6, **caractérisé en ce qu'**au moins une des bobines primaire et secondaire (19, 20) est logée dans la partie de paroi ou la partie de vantail sollicitée par force ressort contre l'autre bobine respective de manière déplaçable en direction de l'axe de charnière.

8. Dispositif selon l'une quelconque des revendications 1 à 7, **caractérisé en ce que** la longueur de la bobine en direction de l'axe de charnière est inférieure au diamètre extérieur du boîtier de bobine.

9. Dispositif selon l'une quelconque des revendications 1 à 8, **caractérisé en ce que** la bobine primaire (19) et la bobine secondaire (20) sont réalisées de la même manière.

10. Dispositif selon l'une quelconque des revendications 1 à 9, **caractérisé en ce que** l'inductance de la bobine primaire (19) et/ou de la bobine secondaire (20) est entre 1 µH et 100 µH.

11. Dispositif selon la revendication 10, **caractérisé en ce que** l'inductance de la bobine primaire et/ou de la bobine secondaire (19, 20) est d'environ 30 µH.

12. Dispositif selon l'une quelconque des revendications 1 à 11, **caractérisé en ce que** la bobine primaire (19) et la bobine secondaire (20) sont adaptées pour une tension effective de max. 48 V.

13. Dispositif selon l'une quelconque des revendications 1 à 12, **caractérisé en ce que** la bobine primaire (19) et/ou la bobine secondaire (20), en particulier leurs faces frontales tournées l'une vers l'autre sont entourées par correspondance de matière d'un matériau électriquement isolant.
